# EUROPEAN PATENT APPLICATION

(11) **EP 1 912 196 A1**
(43) Date of publication of application: **16.04.2008**
(21) Application number: 06021155.4
(22) Date of filing: 09.10.2006
(51) Int. Cl.: G09B 29/10, G01C 21/00

(54) **Insertion of static elements in digital maps**

(71) Applicant: Harman Becker Automotive Systems GmbH, 76307 Karlsbad (DE)
(72) Inventor: Strassenburg-Kleciak, Marek, 20535 Hamburg (DE); Meyer, Hendrik, 22307 Hamburg (DE)
(74) Representative: Grünecker, Kinkeldey, Stockmair & Schwanhäusser Anwaltssozietät

(57) **Abstract**

The present invention relates to a method for inserting at least one graphical object corresponding to one fixture at at least one position in a digital map, comprising the steps of: storing data relating to at least one fixture class in a lookup table, determining at least one position in the digital map, reading the data related to the at least one fixture class, generating at least one graphical object representing the at least one fixture based on the data related to the at least one fixture class, assigning the graphical object to the determined position and displaying the assigned graphical object at the predetermined position.

## Description

### Field of Invention

The present invention relates to digital maps representing towns and landscapes and, in particular, it relates to the managing and display of static elements, as vegetation, landmarks and topographical objects, in two-dimensional and three-dimensional digital maps, e.g., digital city maps and digital road maps.

### Background of the Invention

Digital maps as, e.g., city maps and road maps became increasingly prevalent in recent years. They represent important building blocks in, e.g., handheld and vehicle navigation systems. The electronic maps may represent cartographic features, as streets, buildings and rivers, and make use of a storage medium, e.g., a compact disk or a digital video disc to store the data that relates to the cartographic features.

Some navigation systems are able to display detailed digital maps indicating routes to destinations, the types of manoeuvres to be taken at various locations as junctions as well as different kinds of points of interest as, e.g., gas stations or restaurants and also landmarks.

More elaborated navigation systems provide enlarged views, for example, of junctions on the guide route, where the driver should turn, in order to help the driver to identify the route to be taken to the predetermined destination more accurately. The displayed images represent simplified synthesized views from the driver's perspective.

Recently, various navigation systems have been developed that have provided algorithms for transforming data from a digital database into a three-dimensional perspective view which, in principle, is much more easily understood by many drivers. Elaborated systems allow for displaying the intersection approached by the vehicle at variable angles relative to the road depending on the complexity of the intersection.

However, a main difficulty in providing environmental data, e.g., in the context of a city representation for use by navigation application programs relates to the efficient utilization of the available computer resources and storage capacity. Three-dimensional polygon data can be used to model a three-dimensional map that is stored in a medium as, for example, a CD-ROM or DVD, or the data is calculated before displaying it on the grounds of 2-dimensional map data supplemented by width and height information.

The database may comprise a main image file comprising bitmap images consisting, e.g., of bitmap of the road geometry signposts, landmarks, the skyline etc. Due to the limited computer resources, however, such two- and three-dimensional representations of fixtures or elements of cities or landscaped that give a more realistic impression of the actual surrounding, as the actual vegetation, are relatively rough-textured. Moreover, fixtures are only included in specific views in an isolated manner. Data management of the individual representations of fixtures presently demands for relatively memory capacities.

It is therefore an object underlying the present invention to provide an efficient solution for the management, storage and display of synthetic representations of elements that build parts of realistic digital impressions of the physical environment, in particular, city or landscape views. Particularly, it is an object to provide a solution for the problem of an efficient management, storage and display of such elements in the context of vehicle navigation systems with limited computer resources and comprising display means for displaying digital maps for guidance purposes.

### Description of the Invention

The above-mentioned object is obtained by the method for inserting at least one graphical object corresponding to one fixture at at least one position in a digital map according to claim 1, comprising the steps of:
storing data relating to at least one fixture class in a lookup table;
determining at least one position in the digital map;
reading the data related to the at least one fixture class;
generating at least one graphical object representing the at least one fixture based on the data related to the at least one fixture class;
assigning the graphical object to the determined position; and
displaying the assigned graphical object at the determined position.

By the term fixture herein a static physical element of a landscape or town etc. is meant, e.g., a tree or street lighting or a landmark. The physical element is represented by a graphical object inserted in a digital map, e.g., consisting of or comprising a bitmap or a vector graphic object.

Thus, the at least one assigned graphical object may represent at least one fixture selected from the group comprising, e.g., plants and/or traffic signs and/or traffic lights and/or street lighting and/or buildings and/or landmarks. The digital map may be a digital city map and the at least one assigned graphical object, e.g., a bitmap or a vector graphic object, might preferably be displayed by a display means of a vehicle navigation system.

The at least one graphical object may be displayed in a two-dimensional view or in a three-dimensional perspective view, e.g., showing the graphical object from the viewpoint of a user of a navigation system configured to display the digital map for route guidance. Whereas a two-dimensional display reduces the processor load, a three-dimensional perspective view can improve the orientation of a driver and advantageously result in a more realistic representation of the surrounding.

Whereas bit-mapped images consist of rows and columns of dots, vector graphics are represented as mathematical formulas that define all the shapes in an image. Vector graphics, being based on mathematical functions, are scalable, not restricted to rectangular shapes and transparent. Moreover, vector graphics require less disk space than bitmaps, since they can be calculated from relatively few data points that have to be stored. Thus, vector graphics can relatively easily be used for calculating and displaying, e.g., three-dimensional perspective views of fixtures represented at predetermined positions by graphical objects in the digital map.

Fixtures are divided into fixture classes as, e.g., a class of trees and a class of traffic signs. Each fixture class may be sub-divided into fixture sub-classes. A class of trees, e.g., may be divided into sub-classes of birches and oaks that might be further sub-divided into classes of silver birches, white birches, yellow birches etc. and bog oaks cork oaks, common oaks etc, respectively.

In the lookup table data is stored that is related to fixtures and includes specific information on the particular fixtures of a sub-class, e.g., information on the color, height and texture of these fixtures. This information is used for drawing the graphical object, e.g. as a vector graphic in a digital map.

Moreover, the data may contain some statistical information on "typical" exemplars of fixtures, e.g., the typical height-to-width ratio of a fixture or the relative sizes of components of a fixture. This is useful in a case in which a graphical object representing a fixture shall be inserted in a digital map and, e.g., only the height is known explicitly by an operator who intends to insert the graphical object. Insertion of the graphical object is performed by means of the data stored for the appropriate sub-class. Statistical information for the height-to-weight ration of the particular fixture to be represented by a graphical object is used for the actual generation of the graphical object.

If, e.g., a large lime tree is to be represented by a graphical object at a predetermined position in the digital map, data in a fixture class for trees, a sub-class for lime trees and a further sub-class for large lime-trees might be used. This data may comprise statistical data on typical large lime trees as the height-to-width ratio of the stem, the ratio of the diameter of the stem to the diameter of the crown of the tree, etc.

At least one graphical object is generated on the basis of the data read from the lookup table and assigned to a position determined in the map. The assignment may be comprise establishing a reference, e.g., by a pointer, from the graphical object to coordinates used in the digital map. The coordinates may be geographical coordinates or proprietary coordinates used for managing the data presented in the digital map. The digital map may, e.g., include graphical representations of streets and intersections, bridges and parking as well as building areas. The digital map in which a graphical object is to be inserted may also contain graphical objects representing fixtures that have previously been inserted in the map.

The graphical object is eventually displayed at the determined position. Determination of the position can be performed in response to a manual location input or automatically in the basis of previously read location data that may be provided in the form of coordinates. The manual location input may be performed by a pointing device as a computer mouse or by means of a touch screen.

According to the inventive method described above, parameters of fixtures used for the generation of graphical objects are stored rather than copies of entire geometries thereby reducing the demand for memory requirements as compared to the art. Efficient data storage and management is thereby enabled.

In addition, modifications of the data stored corresponding to classes or sub-classes of graphical objects effect each individual object. Therefore, the lookup tables can easily be customized and adapted to particular target systems depending on the available hardware resources and software applications. In particular, design updates for the graphical objects or even a completely new design, e.g., due to a recent release of a navigation software, can be carried out without the need for re-positioning of the graphical objects at the appropriate place in the digital map.

It is also envisioned that a user of a navigation system comprising a digital map database may be enabled by the inventive method to introduce new graphical objects in digital maps he received from a provider of the software of the navigation system.

According to an example of the herein disclosed method, at least one of the fixture classes or fixture sub-classes can be instantiated by generating at least one data representation of at least one fixture. The data representation can be a graphical object and the instantiation is performed by generating a concrete instant of the respective fixture class or fixture sub-class. Accordingly, the herein disclosed method can readily be used within the framework of object oriented programming. The data representation may be a graphical object representing an instance of the respective class or sub-class.

Data associated with the class or the graphical object can be stored in variables. The class "trees" may, e.g., include variables for the origin width and height of a graphical representation of a tree. The class may also contain a method for calculating an area covered by the graphical representation of a tree, a traverse of a polygon structure used for drawing the graphical object etc.

It might be preferred to store one or more generated and assigned graphical objects in the digital for a fast retrieval, in particular, in cases in which particular objects are considered important for orientation during route guidance on routes that are frequently traveled. However, storage of generated graphical objects implies a demand for higher storage capacities.

As mentioned above bitmaps and/or vector graphics can be employed for the generation of the graphical objects corresponding to fixtures. Thus, according to one example of the herein disclosed method bitmaps may be stored in a bitmap database and/or vector graphics may be stored in a vector database; and the at least one assigned graphical object can be composed of at least one of the bitmaps and/or of at least one of the vector graphics.

The vector database can separately be updated and the vector graphics are desirably provided in a data format and are calculated from algorithms, which are optimized for the limited computer resources of a vehicle navigation system. Data of each vector graphic has to be stored in a vector database only once. Based on this data, calculation of views of the vector graphic objects representing fixtures as, e.g., landmarks or trees, from different perspectives can be performed relatively fast.

A display device used for display may be controlled such that display layers comprising bitmap data from the bitmap database and at least one different display layer comprising vector graphics data from the vector database are displayed.

It might be preferred to store a digital map that does not include the at least one assigned graphical object and to concurrently display the at least one assigned graphical object on one display layer and at least a part of the digital map on at least one other display layer. At least one display layer in the bitmap representation of data provided by a digital map database and at least one display layer in the vector graphics representation showing a perspective view of the at least one assigned graphical object may be displayed.

The employment of different display layers allows for an efficient and reliable management of the process of displaying concurrently different kinds of digital objects as, e.g., bitmaps of a digital map and a vector graphic object representing a tree or a landmark.

The present invention furthermore provides a computer program product, comprising one or more computer readable media having computer-executable instructions for performing the steps of the method according to one of the above described embodiments.

The above mentioned object is also achieved by a vehicle navigation system according to claim 9, comprising
a storage medium (e.g. a CD, a DVD, a hard disk) configured to store at least one digital map;
a storage medium (e.g. a CD, a DVD, a hard disk) configured to store data related to at least one fixture class in a lookup table;
a display means configured to display a digital map for route guidance;
an object generating means configured to generate at least one graphical object representing at least one fixture based on the data related to the at least one fixture class; and
a control means configured to control the display means to display the at least one graphical object at a predetermined position in the digital map.

Implementation of the above described examples of the method for inserting at least one graphical object corresponding to one fixture at at least one position in a digital map is particularly advantageous in navigation systems installed in vehicles that usually suffer from limited computer resources. The at least one displayed graphical object can, e.g., represent at least one fixture selected from the group comprising plants and/or traffic signs and/or traffic lights and/or street lighting and/or buildings and/or landmarks.

The data used for the generation of the graphical objects may be organized by means of fixture sub-classed as discussed above. The storage medium may be a hard disc, a CD or a DVD etc. and the navigation system comprises a main memory, e.g. a RAM. The display means may, e.g., be an LED or an LCD display. The object generating means may be operated manually by an operator or may be activated by software that, e.g., is installed for an entire or partly update of the navigation software of the navigation system.

The vehicle navigation system may further comprise an object database configured to store the at least one graphical object that is generated by the object generating means and/or it may further comprise a bitmap database configured to store bitmaps and/or a vector database configured to store vector graphics and the object generating means may be configured to generate the at least one graphical object by means of at least one of the bitmaps and/or at least one of the vector graphics.

According to one embodiment the control means of the navigation system is configured to concurrently display the at least one assigned graphical object on one display layer and at least a part of the digital map on at least one other display layer.

Additional features and advantages of the present invention will be described with reference to the drawings. In the description, reference is made to the accompanying figures that are meant to illustrate preferred embodiments of the invention. It is understood that such embodiments do not represent the full scope of the invention.

Figure 1 shows components of a vehicle navigation system according to the present invention including a lookup table stored in a database and an object generating means.

Figure 2 shows an example for inserting a graphical object representing a particular lime tree in a digital map according to an example of the present invention.

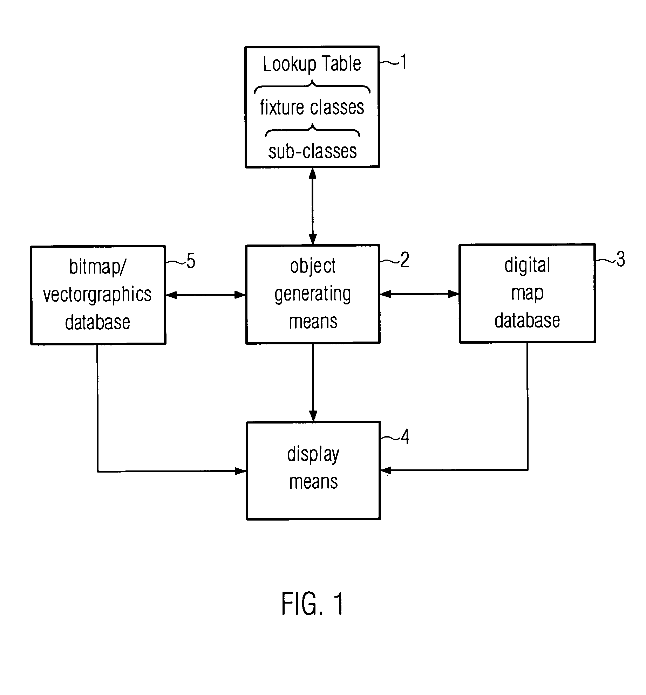

Figure 1 illustrates basic components of a navigation system for a vehicle configured to display graphical objects corresponding to static elements, i.e. fixtures, in a digital map. The navigation system comprises a database 1 storing at least one lookup table which includes information on fixture classes and fixture sub-classes. Typical examples for fixture classes are kinds of vegetations as, e.g., trees and bushes, and traffic signs, memorials and wells. The fixture classes can be divided into sub-classes. For the fixture class "trees", e.g., possible sub-classes may be "oak", "birch", "lime", etc. Further sub-classes can be included as, e.g., "oaklet" or "basswood".

An object generating means 2 allows for the generation of at least one graphical object corresponding to at least one fixture. The object generating means 2 reads out the corresponding data from the lookup table. In order to generate a traffic sign indicating a speed restriction area, e.g., information of a class "traffic signs" and a sub-class "speed limit: 50 km/h" may be looked up in the database 1 including the above mentioned lookup table. Subsequently, the graphical object, e.g., the well-known round traffic sign with white field, red periphery and a black "50" is generated and inserted in a digital map at a predetermined position.

According to the present example, the object generating means 2 directly exchanges data with a digital map database 3 in order to determine where the generated graphical object representing the traffic sign should be placed. The object generating means 2 provides a display means 4 with information about what graphical object has to be displayed at what position in a digital map shown to a driver of a car that is equipped with the navigation system for route guidance. A control means (not shown) may alternatively read out the needed data from the digital map database 3 and may receive data about the generated graphical object from the object generating means 2 to instruct the display means 4 to display the generated graphical object at the predetermined position in the digital map.

In the lookup table parameters for the fixtures to be represented by graphical objects as, e.g., bitmap objects and/or vector graphic objects stored in a database 5, are stored. Thus, change of these parameters can result in a different appearance of the displayed graphical objects previously generated by the object generating means 2.

According to a relatively simple example, buildings can be represented by rectangular shapes and trees and bushes by circular shapes. Other possible representations can be based on recursive methods of geometrical modeling that allow for displaying even individual leaves of trees or polygon structures comprising an alpha texture, i.e. an image structure partly made of three color pixels (red, green, blue) and transparent pixels which define the transparency of the displayed image pixel by pixel.

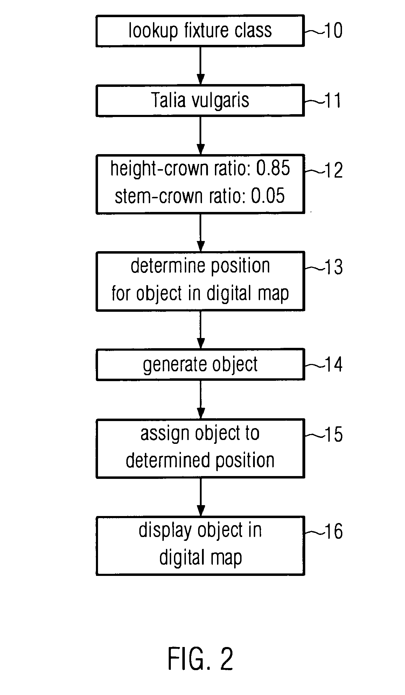

Figure 2 illustrates how to insert a particular lime tree at a predetermined position in a digital map according to an example of the present invention. The class "trees" is looked up which according to this example includes sub-classes identified by the Latin names of tree species, e.g., Abies alba, Juglans regia, Pinus, Quercus, Talia, etc. These sub-classes include information on the different species, e.g., related to the size of the stem and the color and shape of the barks and the leaves.

Further sub-classes are present including even more specified information on subspecies, e.g., Pinus cembra, Pinus nigra, Pinus pinea etc. According to the present example, the sub-class Talia vulgaris is chosen 11 for reading information on the fixture to be represented by a graphical object in a digital map, e.g., a city map. Information include 12 data on the ratio of total height of the tree, in the present case, the exemplar of the Talia vulgaris, to the diameter of the crown of the tree 0.85. The information also includes the ratio of the diameter of the stem to the diameter of the crown of the tree 0.05.

Similar data can be included in the lookup table, e.g., for Acer: ratio of the total height of the tree to the diameter of the crown of the tree 1.25 and ratio of the diameter of the stem to the diameter of the crown of the tree 0.06; Robinia: ratio of total height of the tree to the diameter of the crown of the tree 1.45 and ratio of the diameter of the stem to the diameter of the crown of the tree 0.03 etc.

This implies that modeling of a particular tree, e.g. a lime tree, by means of a suitable vector graphic can be carried out on the basis of statistical evaluations of lime trees. If, for example, additional information is given on the diameter of the crown of the tree that is to be represented by a graphical object, by means of the statistical information given in the sub-class for Talia vulgaris the height and diameter of the stem can be deduced and used for the graphical representation in a digital map.

After or before the information for the graphical object representing an exemplar of Talia vulgaris that is to be generated is read from the lookup table, the position at which the graphical object is to be placed in the digital map is to be determined 13. The graphical object is generated 14 according to the data 11, 12 that has been read from the appropriate class looked up from the lookup table 10.

The graphical object is then assigned 15 to the determined position.-The graphical object can be assigned to the coordinates used in the digital map. The assigned graphical object is displayed 16 in the digital map at the proper place. Different display layers can be used for the display of the graphical object, e.g. a vector graphic, and the other elements of the digital map, e.g., streets, intersections, etc.

## Claims

1. A method for inserting at least one graphical object corresponding to one fixture at at least one position in a digital map, comprising the steps of:
storing data relating to at least one fixture class in a lookup table;
determining at least one position in the digital map;
reading the data related to the at least one fixture class;
generating at least one graphical object representing the at least one fixture based on the data related to the at least one fixture class;
assigning the graphical object to the determined position; and
displaying the assigned graphical object at the predetermined position.

2. The method according to claim 1, further comprising
storing data related to at least one sub-class of the at least one class; and wherein the at least one graphical object representing the at least one fixture is generated based on the data related to the at least one fixture sub-class.

3. The method according to claim 2, wherein
at least one fixture class or fixture-sub class is instantiated by generating at least one data representation of at least one fixture, in particular, by generating a graphical object.

4. The method according to one of the preceding claims, further comprising storing the at least one assigned graphical object.

5. The method according to claim 4, further comprising
storing bitmaps in a bitmap database and/or
storing vector graphics in a vector database; and wherein
the at least one assigned graphical object is composed of at least one of the bitmaps and/or of at least one of the vector graphics.

6. The method of one of the preceding claims, further comprising
storing a digital map that does not include the at least one assigned graphical object; and
concurrently displaying the at least one assigned graphical object on one display layer and at least a part of the digital map on at least one other display layer.

7. The method of one of the preceding claims, wherein the at least one assigned graphical object represents at least one fixture selected from the group comprising plants and/or traffic signs and/or traffic lights and/or street lighting and/or buildings and/or landmarks and wherein the digital map is a digital city map and wherein the at least one assigned graphical object is displayed by a display means of a vehicle navigation system.

8. The method of one of the preceding claims, wherein the at least one graphical object is displayed in a two-dimensional view or in a three-dimensional perspective view.

9. Computer program product, comprising one or more computer readable media having computer-executable instructions for performing the steps of the method according to one of the claims 1-8.

10. A vehicle navigation system, comprising
a storage medium configured to store at least one digital map;
a storage medium configured to store data related to at least one fixture class in a lookup table;
a display means configured to display a digital map;
an object generating means configured to generate at least one graphical object representing at least one fixture based on the data related to the at least one fixture class; and
a control means configured to control the display means to display the at least one graphical object at a predetermined position in the digital map.

11. The vehicle navigation system of claim 10, wherein the data related to at least one fixture class is related to at least one fixture sub-class.

12. The vehicle navigation system of claim 10 or 11, further comprising an object database configured to store the at least one graphical object that is generated by the object generating means.

13. The vehicle navigation system of one of the claims 10 - 12, further comprising
a bitmap database configured to store bitmaps and/or
a vector database configured to store vector graphics; and wherein
the object generating means is configured to generate the at least one graphical object by means of at least one of the bitmaps and/or at least one of the vector graphics.

14. The vehicle navigation system of one of the claims 10-13, wherein the control means is configured to concurrently display the at least one assigned graphical object on one display layer and at least a part of the digital map on at least one other display layer.

15. The vehicle navigation system of one of the claims 10-14, wherein the at least one displayed graphical object represents at least one fixture selected from the group comprising plants and/or traffic signs and/or traffic lights and/or street lighting and/or buildings and/or landmarks.
